# EUROPÄISCHE PATENTSCHRIFT

(11) **EP 2 156 989 B1**
(45) Veröffentlichungstag und Bekanntmachung des Hinweises auf die Patenterteilung: **27.04.2011**
(21) Anmeldenummer: 08014896.8
(22) Anmeldetag: 22.08.2008
(51) Int. Cl.: B60R 19/32, F16F 9/53

(54) **Energie absorbierende Vorrichtung**
Energy-absorbing device
Dispositif absorbant l'énergie

(43) Veröffentlichungstag der Anmeldung: 24.02.2010
(73) Patentinhaber: ThyssenKrupp Presta Aktiengesellschaft, 9492 Eschen (LI)
(72) Erfinder: Battlogg, Stefan, 6771 St. Anton i. M. (AT); Elsensohn, Gernot, 6771 St. Anton i. M. (AT); Kirmsze, Helmut, 9494 Schaan (LI); Pösel, Jürgen, 6700 Bludenz (AT)
(74) Vertreter: Torggler, Paul Norbert

(56) Entgegenhaltungen:
- WO-A-00/37298
- WO-A-2007/068435
- WO-A-2007/068436
- DE-A1- 4 433 056

## Beschreibung

Die Erfindung betrifft eine Energie absorbierende Vorrichtung für den Insassenschutz in Fahrzeugen, mit einem Behälter, in dem eine magnetorheologische Flüssigkeit enthalten ist, die bei einem Aufprall durch eine Fließstrecke gedrückt wird, und mit einer ein veränderbares Magnetfeld erzeugenden Einrichtung, die der Fließstrecke zugeordnete Polflächen aufweist, über die das Magnetfeld zur Regelung der Fließeigenschaften auf die magnetorheologische Flüssigkeit einwirkt.

Um die Fließfähigkeit der magnetorheologischen Flüssigkeit mittels eines Magnetfeldes so beeinflussen zu können, dass der Strömungswiderstand der Fließstrecke sich ändert, sind verschiedene Kriterien zu erfüllen. Ein von einer Spule erzeugtes Magnetfeld muss in die magnetorheologische Flüssigkeit eingebracht werden, wofür Elemente und Teile der Vorrichtung, die für den direkten Weg der Feldlinien durch die magnetorheologische Flüssigkeit vorgesehen sind, besser magnetisch leitend sein sollten, als andere Elemente und Teile, die außerhalb des direkten Weges der Feldlinien sind.

Eine derartige Vorrichtung ist beispielsweise in der WO 2007/068436 beschrieben. Das Magnetfeld wird von einer Spule erzeugt, die mit einem C-förmigen Kern aus einem magnetisch aktiven Werkstoff, insbesondere einem Eisenkern, versehen ist. Zwischen den beiden gering beabstandeten Polflächen des C-förmigen Kerns wird ein im Querschnitt rechteckiger Austrittskanal aus dem Behälter hindurchgeführt, der die Fließstrecke enthält. Die an den Polflächen anliegenden Wände des Austrittskanales sind aus magnetisch gut leitendem Material, die Seitenwände hingegen aus einem magnetisch zumindest schlechter leitenden Material als die magnetorheologische Flüssigkeit.

Die besonderen Umstände bei einem Aufprall lassen nur eine äußerst kurze Zeitspanne übrig, innerhalb der die Fließfähigkeit der magnetorieologischen Flüssigkeit verändert werden muss. Für die Änderung der Fließfähigkeit wird eine Mindestverweilzeit im Magnetfeld benötigt, sodass der Querschnitt des Austrittskanales und dessen magnetisierende Länge, also die Länge der Polflächen das in der Mindestverweilzeit magnetisierbare Volumen der magnetorheologischen Flüssigkeit vorgeben. Um den aus der die Flüssigkeit im Behälter beaufschlagenden Druckfläche und deren Verfahrgeschwindigkeit beim Aufprall resultierenden Volumenstrom an den durch die Mindestverweilzeit bestimmten Volumenstrom anzugleichen, sind bestimmte Dimensionen des Austrittskanales erforderlich. Da die durch den Abstand zwischen den Polflächen bestimmte Höhe des Austrittskanales nur bedingt vergrößert werden darf, können also meist nur die Breite des Austrittskanals und die Länge, innerhalb der das Magnetfeld wirkt, geändert werden, sofern nicht Bauraumprobleme auch diese begrenzen.

Gemäß der WO 2007/068436 wird versucht, die Verweilzeit der Flüssigkeit zwischen den Polflächen durch Einbauten in die Fließstrecke zu vergrößern, wenn die Länge der Fließstrecke, innerhalb der das Magnetfeld wirkt, zu gering ist, beispielsweise durch eine Trennplatte mit einer Mehrzahl von beidseitig hochstehenden Stegen, die in versetzten Reihen angeordnet sind. Der Weg der Flüssigkeit wird dadurch verlängert, jedoch wird durch die Stege die Querschnittsfläche des Austrittskanals und damit das pro Zeiteinheit magnetisierbare Volumen verkleinert.

Die Erfindung hat es sich nun zur Aufgabe gestellt, auch bei äußerst beschränkten Platzverhäftnissen die die Viskositatsänderung der magnetorheologischen Flüssigkeit bewirkenden magnetischen Kräfte einzubringen, und löst dies dadurch, dass die Spule mit dem Kern in der Fließstrecke angeordnet ist, wobei die Achse der Spule senkrecht zur Fließrichtung der magnetorheologischen Flüssigkeit liegt, und dass die Fließstrecke eine Umhüllung aus einem magnetisch leitenden Material aufweist. Das magnetisch gut leitende Material ist insbesondere ein Werkstoff, wie er für Spulenkerne in der Praxis verwendet und in weiterer Folge als Spulenkernmaterial bezeichnet wird.

Da Spulen samt Kern an der Außenseite entfallen, und die Umhüllung der Fließstrecke, die im Allgemeinen ein Rohr oder dergleichen ist, als Teil des Spulenkernes verwendet wird, wird so eine besonders raumsparende Konstruktion erzielt.

In einer bevorzugten ersten Ausführung, durch die auch die Magnetisierung der magnetorheologischen Flüssigkeit wesentlich verbessert wird, sieht vor, dass die Fließstrecke durch den von der Spule umwickelten Kern in zwei Strömungsbahnen unterteilt ist. Insbesondere ist dabei auch jede der beiden Strömungsbahnen durch zumindest eine weitere Polflächen aufweisende Trennwand unterteilt.

Jede Untertilungg bzw. Trennwand reduziert zwar die Querschnittsfläche der Fließstrecke und damit das pro Zeiteinheit magnetisierbare Volumen der Flüssigkeit, bewirkt aber durch die kleineren Abstände zwischen je zwei Polflächen eine wesentlich bessere Magnetisierung. Dies erlaubt es die Gesamthöhe der Fließstrecke so zu vergrößern, dass deren Durchflussquerschnitt trotz der Trennwand dem zu magnetisierenden Volumen der durchzudrückenden magnetorheologischen Flüssigkeit entsprechend groß gehalten werden kann.

Bevorzugt werden mehrere Trennwände zu einem Paket zusammen gefasst und in die Fließstrecke eingesetzt. In diesem Paket sind die für die Stärke der Magnetisierung maßgeblichen Abstände zwischen den Polflächen sehr klein.

Die innen liegende Spule und die Trennwände reduzieren den freien Durchschnittsquerschnitt, sodass der Eingang in die Fließstrecke eine Engstelle darstellt, wobei die Fließstrecke vorzugsweise in einem Austrittskanal des Behälters vorgesehen ist. Die zusätzlichen Polflächen erhöhen die Konzentration des Magnetfeldes auf die mit dem Magnetfeld in Wechselwirkung tretenden Partikel in der magnetorheologischen Flüssigkeit. Zur Verbesserung der Wirkung sollten dabei in der Strömung Turbulenzen möglichst vermieden werden, zumindest nicht gefördert werden. Deshalb ist der Einbau von Trennwänden, die eine glatte, keine Turbulenzen fördernde Oberfläche aufweisen, zu bevorzugen. Insbesondere sind ebene Flächen geeignet. Hoch stehende Stege und Kanten sind von Nachteil. Im Gegensatz hierzu sind reibungserhöhende Schichten durchaus denkbar und möglich.

In einer ersten Ausführung kann das Paket aus sich parallel zu den Strömungsbahnen erstreckenden Trennwänden aufgebaut sein, die durch hoch stehende Distanzstücke oder Laschen, insbesondere hochgebogene Randlaschen auf Abstand gehalten sind. Ober eine beliebige Verbindung an den Laschen, direkte Verklebung, Verlötung, Klebestreifen oder dergleichen, kann das Paket zusammen gehalten werden. Beispielsweise können 16 Trennwände á 0,2 mm Dicke vorgesehen sein, die den Austrittskanal in 17 Strömungsbahnen á 0,2 mm unterteilen. Der Austrittskanal hat somit im Bereich der Polflächen eine lichte Höhe von 6,6 mm. Das Paket von Trennwänden kann in einer anderen Ausführung der Erfindung auch durch eine zickzackartige Faltung einer Materialbahn hergestellt sein. Die sich parallel zu den Strömungsbahnen erstreckenden Trennwände können beispielsweise aus Spulenkernmaterial gefertigt und durch Distanzstücke oder Stege aus einem Material voneinander beabstandet sein, das schlechter magnetisch leitet als die magnetorheologische Flüssigkeit.

Zumindest einige der Trennwände, vorzugsweise aber alle Trennwände sind eben und ohne Vorsprünge ausgebildet, und senkrecht auf die zwischen den Polflächen gebündelten Feldlinien des magnetischen Feldes ausgerichtet.

In einer weiteren bevorzugten Ausführung liegen die Trennwände dicht aneinander gereiht senkrecht zur Fließrichtung in der Fließstrecke und weisen fluchtende Schlitze auf, die die Strömungsbahnen bilden. Dabei stellen die Schlitzwände die zusätzlichen Polflächen dar. Eine derartige Trennwand kann als Blechstanzteil, als Sinterteil oder als MIM-Teil (im Metallspritzguss) hergestellt werden, wobei sie beispielsweise leiterartig oder kammartig erscheint. Bevorzugt können sich die verbleibenden Stege zwischen den Schlitzen auch beidseitig eines mittleren Verbindungsstegs erstrecken.

Besonders vorteilhaft und leicht herstellbar ist eine Ausführung, in der die Trennwände aus Transformatorenblech gestanzt und zumindest an den einander berührenden Flächen isoliert, insbesondere lackiert sind. Die Isolierung verhindert, dass entstehende Wirbelströme sich addieren können.

In einer weiteren bevorzugten Ausführung sind die Trennwände in zwei Paketen zusammen gefasst, die beiderseits des von der Spule umwickelten Kerns angeordnet sind. Der zwischen den beiden Paketen von Trennwänden angeordnete Kern ist bevorzugt als annähernd quaderförmiger Block ausgeführt, um den die Spulenwicklung gelegt ist, deren Achse senkrecht zur Strömungsrichtung durch den Austrittskanal liegt. Der Kern innerhalb der Spule kann ebenfalls Strömungsbahnen enthalten, wenn die Wicklung der Spule dreidimensional ist und die Ein- und Austrittsöffnungen der Strömungsbahnen frei lässt.

Die Erfindung macht es auch in einfacher Weise möglich, die Umhüllung mit einem zylindrischen Querschnitt zu versehen. In dieser bevorzugten Ausführungsform umfasst die Vorrichtung insbesondere ein durchgehendes zylindrisches Rohr, in dem die Engstelle, wie erwähnt, durch den Einbau der Spule samt Kern und vorzugsweise auch der beiden Pakete von Trennwänden gebildet ist. In dieser Ausführung ist als Abschluss jedes Paketes bevorzugt ein im Querschnitt kreissegmentförmiges Element aus einem magnetisch gut leitenden Werkstoff zugeordnet, beispielsweise aus einem Trafoblech oder aus Ferritpulver, sodass das zylindrische Rohr ausgefüllt ist.

Werden die Trennwände, wie oben beschrieben, aus dem Spulenkernmaterial gestanzt, so können die verbleibenden Stege nicht aus einem magnetisch schlechter leitenden Material bestehen; es hat sich aber gezeigt, dass die Stege bei entsprechender Minimierung so magnetisch gesättigt werden, dass das Magnetfeld dennoch ausreichend durch die Strömungsbahnen gezwungen wird. Alternativ können mit Vorteil Aussparungen in den Trennwänden vorgesehen sein, durch die hindurch Halterungen aus magnetisch schlecht oder nicht leitendem Werkstoff geführt sind, die die Trennwände voneinander beabstandet halten.

In einer weiteren bevorzugten Ausführung kann vorgesehen sein, dass das Paket einen über die Länge durchgehenden Hohlraum aufweist, der sich mittig im Austrittskanal erstreckt. Diese Ausführung erlaubt es, durch die Engstelle und das eingesetzte Paket einen Bauteil zu führen. Dieser Bauteil kann beispielsweise ein Seil oder eine Kolbenstange oder dergleichen sein, wenn ein die magnetorheologische Flüssigkeit aus dem Behälter im Falle eines Aufpralls drückender Kolben nicht geschoben, sondern gezogen wird. Eine derartige Zugeinrichtung ist in der WO 2007/068435 näher beschrieben. Diese Ausführung der Erfindung ermöglicht eine besonders einfache und kompakte Ausführung, bei sehr geringen Wirkungsverlusten des eingebrachten Magnetfeldes.

Behälter aus Austrittskanal können auch einteilig aus einem durchgehenden Rohr gefertigt sein. Ist das Rohr zylindrisch, wie es besonders bei höheren Drücken vorteilhaft zur Aufnahme der Spannungen bei geringer Verformung ist, so wird der magnetische Kreis durch im Querschnitt kreissegmentförmige Elemente aus Spulenkernmaterial ergänzt bzw. vervollständigt, deren gebogene Flächen an der Innenseite des Rohres aus magnetisch gut leitendem Material anliegen.

Ausgehend vom Kern der Spule etwa in der Mitte der Fließstrecke verlaufen die Feldlinien somit senkrecht nach außen durch die Strömungsbahn bzw. ein Paket von Trennwänden mit zusätzlichen Polflächen und ein kreissegmentförmiges Element in das zylindrische Rohr, aus dem sie diametral gegenüber durch das zweite kreissegmentförmige Element und die zweite Strömungsbahn bzw. ein zweites Paket von Trennwänden in den in der Mitte angeordneten umwickelten Kern zurückkehren.

In einer weiteren bevorzugten Ausführung können eine oder zwei dreidimensionale Spulen vorgesehen werden, die zwischen je zwei in Längsrichtung sich erstreckenden geraden Abschnitten einen etwa halbkreisförmigen Abschnitt aufweisen. Sind zwei dreidimensionale Spulen symmetrisch zueinander angeordnet, so kann jeweils ein kreissegmentförmiges Element als Kern vorgesehen sein, wobei dann zwischen den beiden kreissegmentförmigen Elementen bevorzugt ein Paket von Trennwänden vorgesehen ist. Mit Vorteil kann im Innern des zwischen den zwei Spulen liegenden Pakets, wie oben bereits erwähnt, ein durchgehender Hohlraum ausgebildet sein.

Werden die Trennwände senkrecht zur Fließstrecke vorgesehen und aus Transformatorblech oder einem anderen Spulenkernmaterial gestanzt, so ist weiters bevorzugt vorgesehen, dass in jeder Trennwand zumindest die die Schlitze trennenden Stege und vorzugsweise auch ein mittlerer dem Kern zugehöriger Bereich sowie die kreissegmentförmigen Elemente einstückig und über mindestens einen Verbindungssteg zusammenhängend ausgebildet sind.

Derartige erfindungsgemäße Energieabsorptionsvorrichtungen können beispielsweise in Lenksäulen zur Absorption der Stoßenergie, die im Falle eines Unfalls vom Fahrer auf das Lenkrad übertragen wirb, eingesetzt werden. Hier muss über eine lange Lebensdauer die Funktionalität sichergestellt sein. Damit die magnetorheologische Flüssigkeit möglichst wenig Veränderung über die Lebensdauer ausgesetzt ist, wird die magnetorheologische Flüssigkeit in einer bevorzugten Ausführung in einer Kapsel dicht eingeschlossen. Die Kapsel weist in ihrer Wand bevorzugt einen vorgegebenen Berstbereich auf, der bei Oberschreiten eines vordefinierten Innendrucks aufplatzt und die magnetorheologische Flüssigkeit aus der Kapsel austreten lässt. Dabei ist es denkbar und möglich nur die magnetorheologische Flüssigkeit in die Kapsel einzuschließen und die Kapsel sol in den Behälter einzusetzen, dass der Berstbereich an der Engstelle, an die der Austrittskanal anschließt, zu liegen kommt.

In einer alternativen Ausführungsform sind die gesamte Vorrichtung oder zumindest der mit der magnetorheologischen Flüssigkeit gefüllte Behälter und die Fließstrecke von der Kapsel umschlossen. Der Berstbereich ist in diesem Fall an der von dem Behälter abgewandten Seite der Fließstrecke angeordnet, die bereits von Anfang an mit Flüssigkeit befüllt ist. Öffnet sich der Berstbereich, so tritt die Flüssigkeit aus der entstanden Öffnung aus und strömt durch den Austrittskanal aus. Auf diese Weise kann die "Leerhubzeit", bis die Gegenkraft durch die Strömung durch die Fließstrecke erzeugt ist, verkürzt werden. Zum Auffangen der Flüssigkeit kann eine zusätzliche Auffangkapsel vorgesehen sein, die die erste Kapsel umschließt. Weiter kann das Magnetfeld bzw. das felderzeugende Bauteil im Bedarfsfall zum Aufheizen der Flüssigkeit verwendet werden.

In einer weiteren Ausführung der erfindungsgemäßen Vorrichtung kann auch die gesamte Einrichtung zur Erzeugung des veränderbaren Magnetfelds (Spule, Trennwandpakete, Kern, etc.) in einem zylindrischen Rohr axial verfahren werden, beispielsweise um die Länge der Lenksäule auf unterschiedliche Fahrer einzustellen. Vorteilhaft kann dabei die Einrichtung mittels einer Kolbenstange, durch deren Bohrung die Kabel für die Energieversorgung geführt werden können, gezogen oder gedrückt, oder mittels eines Seiles bewegt werden.

Nachstehend wird nun die Erfindung anhand der Figuren der beiliegenden Zeichnungen näher beschrieben, ohne darauf beschränkt zu sein. Es zeigen:
- Fig. 1: einen schematischen Ausschnitt aus einer Lenksäule mit einer erfindungsgemäßen Vorrichtung,
- Fig. 2: eine teilgeschnittene Schrägansicht einer ersten Ausführung,
- Fig. 3: eine behälterseitige Stirnansicht der ersten Ausführung.
- Fig. 4: einen Längsschnitt durch die erste Ausführung der Vorrichtung,
- Fig. 5: eine Schrägansicht eines Paketes von Trennwänden einer ersten Ausführung,
- Fig. 6: eine zweite Ausführung einer Trennwand,
- Fig. 7: eine vergrößerte Seitenansicht eines Paketes von Trennwänden der zweiten Ausführung,
- Fig. 8: eine zweite Ausführung einer Magnetspule in Schrägansicht,
- Fig. 9: einen Querschnitt durch eine weitere Ausführung der Vorrichtung mit einer Magnetspule nach Fig. 8,
- Fig. 10: einen Längsschnitt durch eine dritte Ausführung der Vorrichtung,
- Fig. 11: einen Längsschnitt ähnlich Fig. 4 durch eine vierte Ausführung,
- Fig. 12: eine perspektivische Ansicht eines Trennwandstapels mit einzelnen Trennwandspulen.

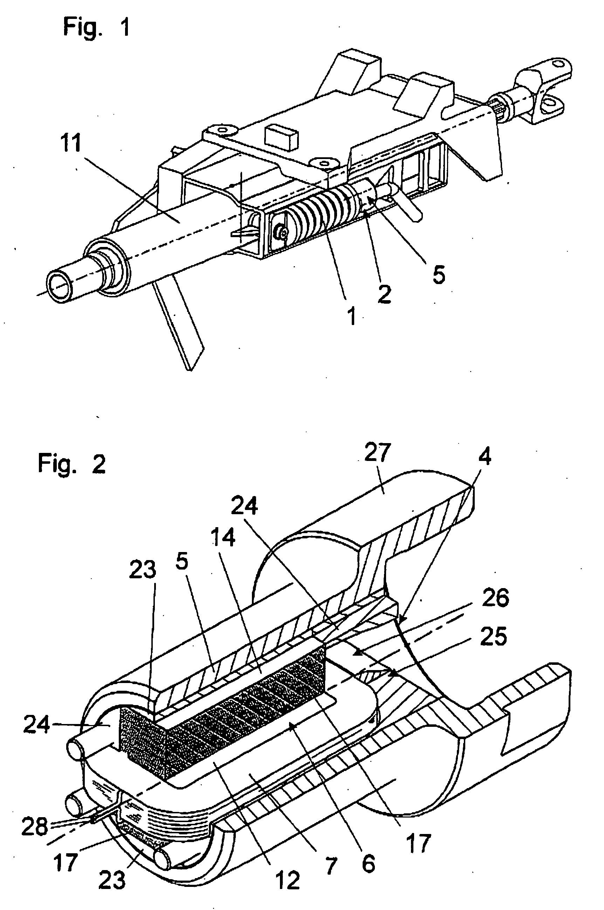

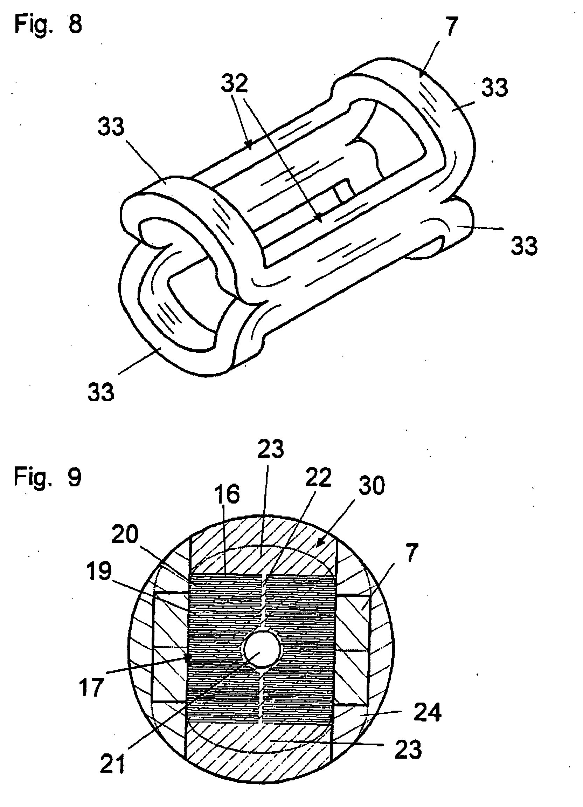

Eine Energie absorbierende Vorrichtung kann, wie Fig. 1 zeigt, beispielsweise an einer Lenksäule 11 parallel zu deren bei einem Zusammenstoß längenverschiebbaren Teilen vorgesehen sein. Die Vorrichtung weist einen Behälter 1 auf, dessen Volumen verkleinerbar ist und in dem eine magnetorheologische Flüssigkeit 3 (Fig. 8) enthalten ist. Der Behälter 1 ist an einem Ende an einem verschiebbaren Teil der Lenksäule 11 fixiert, während das andere Ende, an das ein Austrittskanal anschließt, an einem nicht verschiebbaren Teil der Lenksäule 11 ansteht oder fixiert ist. Bei einem Aufprall kann sich die Lenksäule 11 verkürzen und die im Behälter 1 enthaltene magnetorheologische Flüssigkeit wird durch eine Fließstrecke 5 in den Austrittskanal gedrückt, in der das Auspressen der magnetorheologischen Flüssigkeit verzögert wird. Durch die so erzeugte Gegenkraft wird Aufprallenergie absorbiert.

Im Bereich der Engstelle 4 am Übergang zwischen dem Behälter 1 und der Fließstrecke 5 im Austrittskanal ist eine Einrichtung 2 zur Erzeugung eines veränderbaren Magnetfeldes vorgesehen. Die Einrichtung 2 umfasst einen Elektromagneten, Ober den ein Magnetfeld erzeugt wird, und das die Fließeigenschaften der magnetorheologischen Flüssigkeit beeinflusst. Der Elektromagnet kann über Signale von Sensoren, die einen Aufprall überwachen, in Abhängigkeit von verschiedenen Kriterien, wie Gewicht und Sitzposition des Fahrers usw., angesteuert werden, wobei das veränderliche Magnetfeld die Viskosität der durch die Öffnung zu drückenden magnetorheologischen Flüssigkeit 3 verändert und die Gegenkraft im System, ausgehend von der Engstelle 4 größer oder kleiner wird. Der Behälter 1 in Fig. 1 weist beispielsweise einen zusammendrückbaren Faltenbalg auf.

In Fig. 2 bis 4 sind Details einer ersten Ausführung besser erkennbar. Der Behälter 1 ist insbesondere zylindrisch und enthält einen verschiebbaren Kolben, mittels dem die magnetorheologische Flüssigkeit 3 im Fall eines Aufpralls durch die anschließende Fließstrecke 5 gedrückt wird.

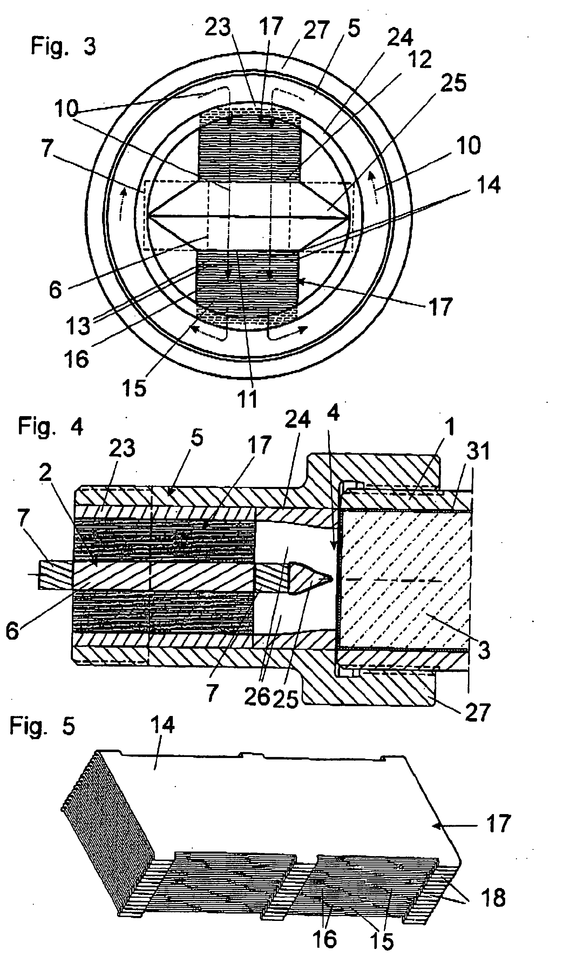

Die Magnetspulenanordnung ist im Inneren der Fließstrecke 5 vorgesehen. Fig. 2 zeigt eine abgewinkelt geschnittene Schrägansicht des Austrittskanals, der als zylindrisches Rohrstück mit Gewindemuffe 27 dargestellt ist. In die Gewindemuffe 27 ist der Behälter 1 eingeschraubt, der ebenfalls durch ein Rohrstück gleichen Durchmessers gebildet ist. Die Engstelle 4 zu Beginn der Fließstrecke 5 ist durch einen keilförmigen Mittelsteg 25 eines Einsatzes 24 gebildet, sodass die aus dem Behälter 1 austretende magnetorheologische Flüssigkeit 3 in zwei Teilströme unterteilt wird. Die Flüssigkeit 3 ist im Behälter 1 in einer dünnwandigen geschlossenen Kapsel 31 enthalten, wie dies beispielsweise in der WO 2007/068016 gezeigt ist. Die Kapsel 31 ist beispielsweise aus einer Folie gefertigt, die nach dem Befüllen mit der Flüssigkeit verschweißt wird. Beim Aufprall platzt die Kapsel 31 und die Flüssigkeit 3 gelangt durch die Fließstrecke 5 in den Austrittskanal. In der Kapsel 31 kann ein gesonderter Berstbereich 32 vorgesehen sein, in dem das Aufplatzen speziell durch z.B. eine Materialschwächung erleichtert ist, damit das Ausströmen der Flüssigkeit definiert erfolgt. Vorteilhaft wird die Materialschwächung so ausgeführt, dass sich beim Aufplatzen keine Splitter/Fetzen bilden, welche die Strömung verschlechtern. Die Spulenanordnung 2 weist eine Magnetspule 7 auf, deren Achse senkrecht zur Fließstrecke 5 liegt und mittig im Austrittskanal so angeordnet ist, dass sie durch den keilförmigen Mittelsteg 25 abgedeckt ist (Fig. 4) Innerhalb der Spule 7 ist ein Kern 6 angeordnet, der in dieser Ausführung quaderförmig ist, und ebene, zueinander parallele Polflächen 11, 12 aufweist.

Als Kern kann ein Permanentmagnet bzw. eine Kombination aus Permanentmagneten und weichmagnetischen Materialien verwendet werden. Jenseits jedes Teilstroms 26 ist jeweils ein annähernd kreissegmentförmiges Element 23 (Polkappe) vorgesehen, das aus Spulenkernmaterial gefertigt ist und an der Innenseite des die Fließstrecke 5 umgebenden zylindrischen Austrittskanals anliegt. Der Austrittskanal ist ebenfalls aus einem Spulenkernmaterial hergestellt, beispielsweise aus einem Eisenrohr od. dgl., um die Magnetfeldlinien 10 zu schließen. Die elektrischen Anschlussleitungen 28 sind am austrittseitigen Ende aus dem Austrittskanal in nicht näher dargestellter Weise herausgeführt. Wie Fig. 4 zeigt, ist dieses Ende ebenfalls mit einem Außengewinde versehen, auf das ein Auffangtopf od. dgl. aufgeschraubt sein kann, was aber nicht unbedingt erforderlich ist. Die magnetische Leitfähigkeit der magnetorheologischen Flüssigkeit 3 ist geringer als die des Kernes 6, der kreissegmentförmigen Elemente 23 und des Austrittskanales, sodass die Wirkung des durch die Feldlinien 10 in Fig. 3 gezeigten Magnetfeldes von der Höhe des Spaltes zwischen dem Kern 6 und dem kreissegmentförmigen Element 23, das heißt der Höhe jedes Teilstroms 26 abhängig ist.

Da die Magnetisierung der magnetorheologischen Flüssigkeit 3 umso besser ist, je kleiner die Höhe der Fließstrecke 4 ist, ist beidseits des Kernes 6 jeder Teilstrom 26 durch Trennwände 15, die aus einem gut leitenden Spulenkernmaterial bestehen und insbesondere zu Paketen 17 zusammen gefasst sind, in Strömungsbahnen 16 unterteilt. Jede Trennwand 15 verringert die Höhe und bildet zusätzliche Polflächen 13, 14, wobei die Trennwände 15 aus Spulenkernmaterial durch Stege 22 voneinander beabstandet sein können, die aus einem magnetorheologisch schlechter leitenden Material bestehen.

Neben Eisen als günstigstes Material mit guten "magnetischen" Eigenschaften kommen weiters auch als Spulenkemmaterialien in Frage:
Silizium-Eisen, ein relativ günstiges Material mit guten magnetischen Eigenschaften, schlechter elektrischer Leitfähigkeit und geringster Remanenz,
magnetischer Stahl, ein Material mit etwas höherem Preis, nicht korrodierend und mit etwas schlechteren magnetischen Eigenschaften,
Nickel-Eisen, eine klassische weichmagnetische Legierung mit höheren Preis und höchster Permeabilität, und
Eisen-Kobalt als teuerstes Material, aber mit höchster Sättigungsflussdichte.

Je nach Einsatzort sind andere Materialien möglich (z.B. Kern aus Ferrit, Eisenpulver oder anderen Pulvermischungen). Eventuell bieten "exotischere" Materialien Vorteile (z.B. BASF Catamold FN50: spritzgusstauglich).

Fig. 5 zeigt Trennwände 15, die an den beiden Längsseitenrändem abgebogene Laschen 18 aufweisen, durch die die Trennwände 15 auf Abstand gehalten werden, und eine Vielzahl von Strömungsbahnen 16 begrenzen. Die Trennwände 15 sind über die Laschen 18 durch Kleben, Löten, od. dgl. zu einem Paket 17 verbunden, das als Einheit in den Austrittskanal eingeschoben werden kann. Die Trennwände 15 bestehen beispielsweise aus einem Transformatorenblech, also einem Material mit sehr hoher magnetischer Leitfähigkeit, und das in Fig. 4 gezeigte Paket 17 umfasst je sechzehn Trennwände 15 und Strömungsbahnen 16, die alle dieselbe Dicke bzw. Höhe von beispielsweise 0,2 mm aufweisen. Das Paket 17 hat somit eine Gesamtdicke von 6,4 mm.

Das Paket 17 weist einen zentralen Hohlraum 21 auf, durch den beispielsweise eine Kolbenstange oder ein Seil geführt werden kann, das an der die magnetorheologische Flüssigkeit 3 aus dem Behälter 1 drückenden Druckfläche, beispielsweise einem Kolben zieht, wie dies in der erwähnten WO 2007/068435 gezeigt ist.

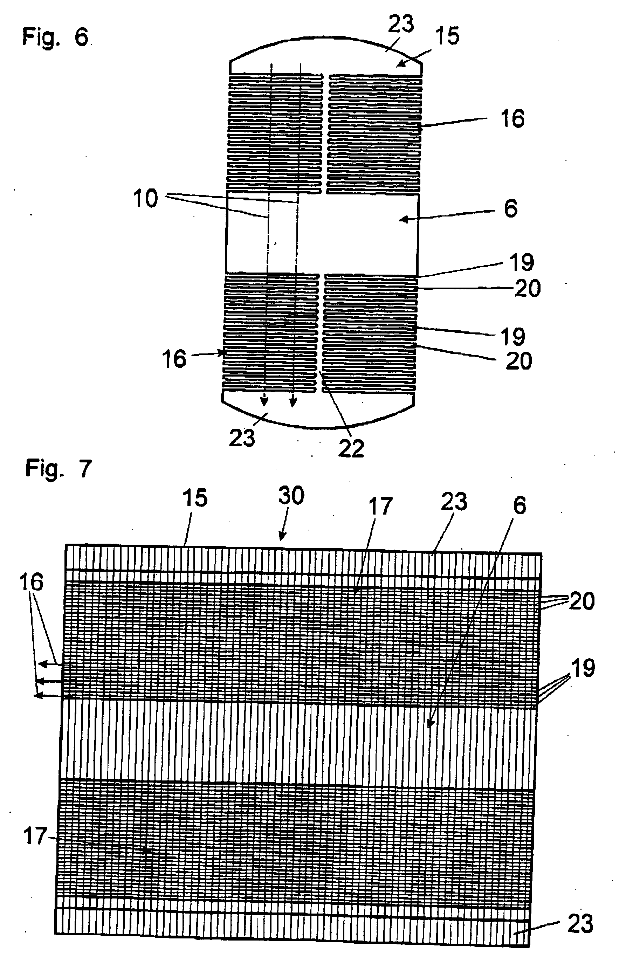

Ein Paket 17 kann aber nicht nur aus in Längsrichtung der Fließstrecke 5 sich erstreckenden Trennwänden 15 zusammengesetzt sein. Fig. 6 und 7 zeigen eine zweite Möglichkeit, ein Paket 17 von Trennwänden 15 mit Strömungsbahnen 16 auszugestalten. Jede Trennwand 15 erstreckt sich dabei in einer Radialebene senkrecht durch den Austrittskanal und die Strömungsbahnen 16 setzen sich aus Schlitzen 19 zusammen, die in die Trennwände 15 eingebracht sind. Eine derartige Trennwand 15 kann insbesondere aus einem Transformatorenblech od. dgl. gestanzt sein, wobei eine Vielzahl von Schlitzen 19 durch Stege 20 voneinander getrennt sind, die von einem mittleren Verbindungssteg 22 (Fig. 6) abstehen. Die Schlitze 19 erstrecken sich dadurch bis zum Rand hin und sind durch Seitenteile des Einsatzes 24 abgedeckt. Verbindungsstege 22 könnten natürlich auch an beiden Rändern vorgesehen sein, und die Schlitze 19 sich zwischen diesen ohne Mittetunterbrechung erstrecken. Wie Fig. 7 zeigt, werden mehrere Trennwände 15 direkt hintereinander angeordnet, wobei die Schlitze 19 fluchten. Die Schlitzwände stellen dabei die zusätzlichen Polflächen 13, 14 dar.

Denkbar ist auch die Ausbildung des Trennwandpakets als gefaltetes Element.

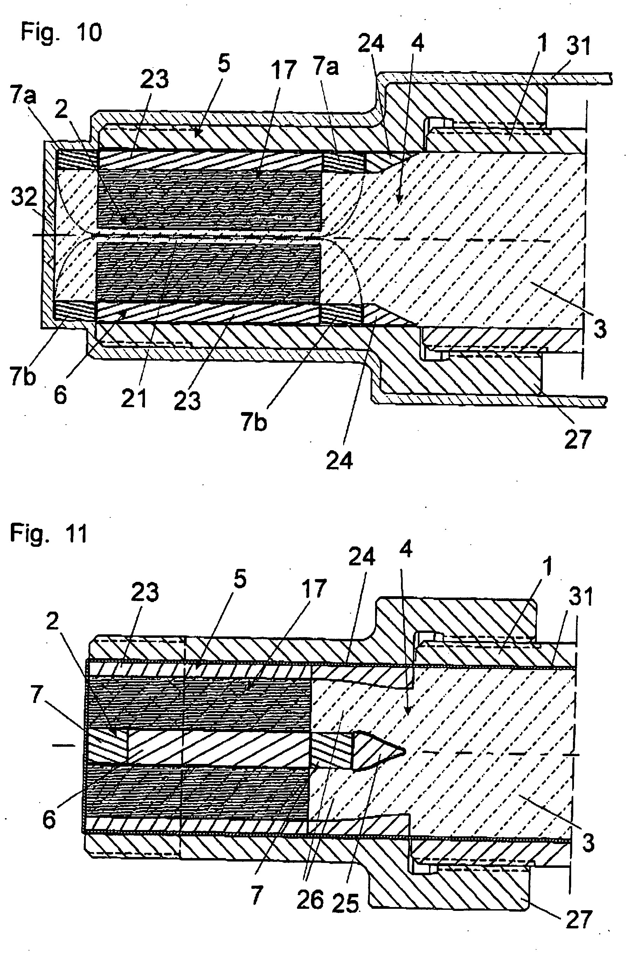

Die Fertigung durch Ausstanzen aus Transformatorenblech od. dgl. erlaubt es weiters, den Spulenkern 6, die beiden Pakete 17 von Trennwänden 15 und die kreissegmentförmigen Abschlusselemente 23 zur Anpassung an den zylindrischen Querschnitt des Austrittskanals 5 in einem Stück herzustellen, das dann die in Fig. 9 gezeigte Form aufweist. Die aneinanderliegenden Seitenflächen der Trennwände 15 können mit einem elektrisch isolierenden Lack versehen sein, sodass in den einzelnen Trennwänden 15 entstehende Wirbelströme sich nicht addieren. Der in Fig. 10 gezeigte Teil 30 wird mit der Spule 7 bestückt und in den Einsatz 24 eingelegt, der dann in den Austrittskanal eingebracht und axial fixiert wird, beispielsweise mit Hilfe des erwähnten am austrittsseitigen Ende aufschraubbaren Auffangtopfes. Der Einsatz 24 besteht aus einem magnetisch schlecht leitenden Material, beispielsweise einem Kunststoff.

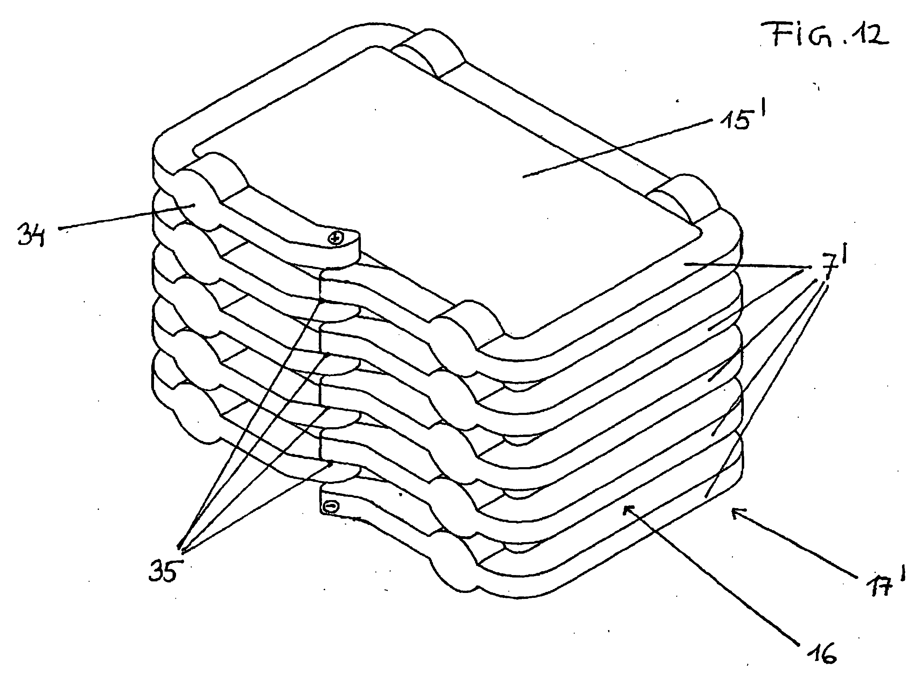

Die Fig. 8 bis 10 zeigen zwei Ausführung, in der die Spule 7 dreidimensional gewickelt ist, d.h. jede Wicklung liegt nicht in einer Ebene, sondern ist aus mehreren Abschnitten zusammengesetzt, wobei zwischen den in Längsrichtung der Fließstrecke 5 sich im Austrittskanal erstreckenden geraden Abschnitten 32 je ein etwa halbkreisförmiger Abschnitt 33 nach oben oder unten geführt ist. Die Spule 7 ist dadurch an den Enden geöffnet, und ein Teil 30 gemäß Fig. 12, kann einen mittleren Hohlraum 21 aufweisen, durch den beispielsweise das oben erwähnte Zugmittel zum Kolben bzw. Boden des Behälters 1 geführt sein kann. Der Hohlraum 21 kann aber auch zur Aufnahme eines Verbindungselementes für das Paket 17 von Trennwänden 15 dienen. Da die Spule 7 an den Enden aufgespreizt ist, kann auch der Kern 6 innerhalb der Spule 7 Strömungsbahnen 16 aufweisen, die zwischen fluchtenden Stegen 20 durch Schlitze 19 gebildet sind.

Die in Fig. 8 gezeigte Form kann sich auch aus zwei Spulen 7a, 7b ergeben, wie in Fig. 10 gezeigt ist. Jeder der beiden Spulen 7a, 7b ist in dieser Ausführung das kreissegmentförmige Element 23 als Kern zugeordnet, wobei zwischen den beiden Elementen 23 ein Paket 17 von Trennwänden 15 angeordnet ist, das Strömungsbahnen 16 und einen mittigen Hohlraum 21 aufweist. Der Einsatz 24 ist ringförmig und zum Behälter 1 hin abgeschrägt, wobei er die Engstelle 4 bildet. Auch in dieser Ausführung ist zumindest der die Fließstrecke 5 beinhaltende Abschnitt des Austrittskanals durch ein zylindrisches Rohrstück mit einer Gewindemuffe 27 gebildet, in die der Behälter 1 eingeschraubt ist. Der Behälter 1 und der Austrittskanal sind in dieser Ausführung gemeinsam innerhalb der Kapsel 31 angeordnet, wobei dessen durch die Materialschwächung gebildeter Berstbereich 32 am austrittseitigen Ende der Fließstrecke 5 vorgesehen ist. Die Fließstrecke 5 ist also ständig mit der magnetorheologischen Flüssigkeit 3 gefüllt. Der Berstbereich 32 ist so ausgelegt, dass die Kapsel 31 platzt, wenn auf die Energie absorbierende Vorrichtung eine Kraft einwirkt, die einen vordefinierten Wert überschreitet.

Eine ähnliche Ausführung zeigt Fig. 11. Hier ist wiederum eine ähnliche mittige Spulenanordnung wie in Fig. 6 bis 8 vorgesehen, wobei aber auch in der Ausführung nach Fig. 11 die Fließstrecke 5 in der Kapsel 31 vorgesehen ist. Die Kapsel 31 kleidet den Austrittskanal und den Behälter 1 aus und weist einen Berstbereich 32 am austrittseitigen Ende der Fließstrecke 5 auf, sodass auch in dieser Ausführung die Fließstrecke 5 ständig mit der magnetorheologischen Flüssigkeit 3 gefüllt ist.

Die in der magnetorheologischen Flüssigkeit 3 bzw. in der Fließstrecke 5 angeordnete Einrichtung zur Erzeugung des veränderbaren Magnetfeldes kann auch eine Leiterplatte mit einer Planarspule und einem Kern umfassen, wobei auf der Leiterplatte auch noch weitere elektronische Bauteile für die Steuerung der Einrichtung 2 angeordnet sein können.

Die Spulen 7 können nicht nur aus einem isolierten Kupferdraht, sondern auch aus einem Kupferband, einer Kupferfolie oder einer eloxierten Aluminiumfolie gefertigt sein.

Die Fig. 12 zeigt ein Ausführungsbeispiels eines Trennwandstapels, bei dem die Fließstrecke durch mit Abstand voneinander angeordnete Trennwände 15' in mehrere Strömungsbahnen 16 unterteilt ist. Eine dieser Strömungsbahnen ist in Fig. 12 beispielhaft samt Angabe der Fließrichtung eingezeichnet.

Bei diesem Ausführungsbeispiel ist jeder Trennwand 15' aus magnetisch leitendem bzw. ferromagnetischem Material eine eigene Trennwand-Spule 7' zugeordnet, die jeweils aus nur einer einzigen Windung besteht. Diese Windung kann beispielsweise von einem isolierten Leiter gebildet sein.

Elektrisch sind die einzelnen Trennwandspulen in Serie geschaltet, wobei der Ausgang der jeweils darüber liegenden Trennwand-Spule 7' mit dem Eingang der darunter liegenden Trennwand-Spule 7' verbunden ist. Die Kontaktstellen sind mit 35 bezeichnet.

Diese Trennwand-Spulen 7' können alternativ oder zusätzlich zur Spule 7 der vorhergehenden Figuren vorhanden sein. Wenn sie nur alternativ zu dieser Spule vorhanden sind, dann bilden diese Trennwand-Spulen zusammen diese Spule 7.

Bevorzugt ist die Windung zumindest an der Einström- bzw. Ausströmseite maximal so hoch wie die Trennwand selbst, womit das Durchströmen nicht behindert wird. An den Seitenflächen kann die Spule höher sein. Hier können auch die Abstandhalter 34 (beispielsweise ausgebildet in der Isolierung der Trennwand-Spule 7') sowie die Kontakte 35 angeordnet sein. Die Windung der Spule kann auch aus einer eluxierten Aluminiumfolie bestehen. Es ist auch möglich, diese Windung auf einer Leiterplatte aufzubringen. Die Leiterplatten werden dann als Multi-Layer gestapelt.

Die Trennwände 15' sind vorzugsweise aus magnetisch leitendem, ferromagnetischen Material und bilden den Kern der einzelnen Trennwandspulen.

Wenn man diese Trennwand-Einzelspulen einsetzt, kann - wie bereits erwähnt - die Spule der vorhergehenden Ausführungsbeispiele mit der Bezugsziffer 7 entfallen. Damit erzielt man einen Gewichts- und Platzvorteil. Bei besonders starken Magnetfeldern kann man aber beide Spulen, nämlich die Spule 7 und die Trennwand-Spulen 7' einsetzen.

## Patentansprüche

1. Energie absorbierende Vorrichtung für den Insassenschutz in Fahrzeugen, mit einem Behälter (1), in dem eine magnetorheologische Flüssigkeit (3) enthalten ist, die bei einem Aufprall durch eine Fließstrecke (5) gedrückt wird, und mit einer ein veränderbares Magnetfeld (10) erzeugenden Einrichtung (2), die einen von einer Spule (7) umwickelten Kern (6) aufweist, wobei das Magnetfeld (10) zur Regelung der Fließeigenschaften auf die magnetorheologische Flüssigkeit (3) einwirkt, **dadurch gekennzeichnet, dass** die Spule (7) mit dem Kern (6) in der Fließstrecke (5) angeordnet ist, wobei die Achse der Spule (7) senkrecht zur Fließrichtung der magnetorheologischen Flüssigkeit (3) liegt, und dass die Fließstrecke (5) eine Umhüllung aus einem magnetisch leitenden Material aufweist.

2. Vorrichtung nach Anspruch 1, **dadurch gekennzeichnet, dass** die Fließstrecke (5) durch den von der Spule (7) umwickelten Kern (6) in zwei Strömungsbahnen (16) unterteilt ist.

3. Vorrichtung nach Anspruch 1 oder 2, **dadurch gekennzeichnet, dass** jede Strömungsbahn (16) durch zumindest eine, ebene Polflächen (13, 14) aufweisende Trennwand (15) unterteilt ist.

4. Vorrichtung nach einem der Ansprüche 1 bis 3, **dadurch gekennzeichnet, dass** mehrere Trennwände (15) parallel zueinander in mindestens einem Paket (17) zusammengefasst sind.

5. Vorrichtung nach Anspruch 3 oder 4, **dadurch gekennzeichnet, dass** die Trennwände (15) in zwei Paketen (17) zusammen gefasst sind, die beiderseits des von der Spule (7) umwickelten Kerns (6) angeordnet sind.

6. Vorrichtung nach Anspruch 4 oder 5, **dadurch gekennzeichnet, dass** sich die Trennwände (15) parallel zu den Strömungsbahnen (16) erstrecken und voneinander durch Distanzstücke, beispielsweise hochstehende Laschen (18) auf Abstand gehalten sind.

7. Vorrichtung nach Anspruch 6, **dadurch gekennzeichnet, dass** die Höhe jeder Strömungsbahn (16) im Wesentlichen der Dicke einer Trennwand (15) entspricht.

8. Vorrichtung nach einem der Ansprüche 1 bis 7, **dadurch gekennzeichnet, dass** der Kern (6) innerhalb der Spule (7) durch mindestens eine Trennwand (15) unterteilte Strömungsbahnen (16) enthält, wobei die Wicklung der Spule (7) die Ein- und Austrittsöffnungen der Strömungsbahnen (16) frei lassen.

9. Vorrichtung nach Anspruch 4 oder 5, **dadurch gekennzeichnet, dass** das Paket (17) einen über die Länge durchgehenden Hohlraum (21) aufweist.

10. Vorrichtung nach Anspruch 4 oder 5, **dadurch gekennzeichnet, dass** sich die Trennwände (15) dicht aneinander gereiht senkrecht zur Fließrichtung erstrecken und Schlitze (19) aufweisen, die die Strömungsbahnen (16) bilden.

11. Vorrichtung nach einem der Ansprüche 3 bis 10, **dadurch gekennzeichnet, dass** die Trennwände (15) aus Transformatorenblech gestanzt und vorzugsweise an den einander berührenden Flächen isoliert, insbesondere lackiert sind.

12. Vorrichtung nach Anspruch 1, **dadurch gekennzeichnet, dass** der Kern (6) ebene Polflächen (11, 12) aufweist, und die Umhüllung der Fließstrecke (5) zylindrisch ist, wobei den ebenen Polflächen (11, 12) des Kerns (6) gegenüberliegend zusätzliche ebene Polflächen (13, 14) an kreissegmentförmigen Elementen (23) vorgesehen sind, deren gewölbte Flächen an die Innenwand der Umhüllung (5) angepasst sind.

13. Vorrichtung nach einem der Ansprüche 10 bis 12, **dadurch gekennzeichnet, dass** in jeder Trennwand (15) zumindest die die Schlitze (19) trennende Stege (20), und vorzugsweise auch ein dem Kern (6) zugehöriger, mittlerer Bereich sowie die kreissegmentförmigen Elemente (23) in einander gegenüberliegenden Endbereichen einstückig und über mindestens einen Verbindungssteg (22) zusammenhängend ausgebildet sind.

14. Vorrichtung nach einem der Ansprüche 1 bis 13, **dadurch gekennzeichnet, dass** die magnetorheologische Flüssigkeit (3) in einer einen vorgegebenen Berstbereich (32) aufweisenden Kapsel (31) eingeschlossen ist, der bei Überschreitung einer definierten äußeren Krafteinwirkung platzt.

15. Vorrichtung nach einem der Ansprüche 1 bis 14, **dadurch gekennzeichnet, dass** die Fließstrecke durch mindestens eine, vorzugsweise mehrere beabstandete Trennwände (15') in Strömungsbahnen unterteilt ist, und zumindest einem Teil der Trennwände, vorzugsweise jeder Trennwand, eine eigene Trennwand-Spule zugeordnet ist, die vorzugsweise im Bereich der Stirnflächen der Trennwände um diese herum geführt ist.

16. Vorrichtung nach Anspruch 15, **dadurch gekennzeichnet, dass** die Trennwand-Spule eine einzige Windung aufweist.

17. Vorrichtung nach Anspruch 16 oder 17, **dadurch gekennzeichnet, dass** die Trennwand-Spule von einem isolierten Leiter gebildet ist.

18. Vorrichtung nach einem der Ansprüche 1 bis 17, **dadurch gekennzeichnet, dass** die Trennwand-Spulen benachbarten Trennwände elektrisch verbunden, vorzugsweise in Serie geschaltet sind.

19. Vorrichtung nach einem der Ansprüche 1 bis 18, **dadurch gekennzeichnet, dass** die Vorrichtung bei maximal angelegtem Magnetfeld den Durchtritt der magnetorheologischen Flüssigkeit durch die Strömungsbahnen (9) sperrt.

20. Vorrichtung nach Anspruch 19, **dadurch gekennzeichnet, dass** mit der Vorrichtung Drücke in der magnetorheologischen Flüssigkeit bis zu 60 bar, vorzugsweise bis zu 200 bar, sperrbar sind.

21. Lenksäule mit einer Energie absorbierenden Vorrichtung nach einem der Ansprüche 1 bis 14.

## Claims

1. An energy-absorbing apparatus for occupant protection in vehicles comprising a receptacle (1) containing a magneto-rheological fluid (3) being pressed through a flow zone (5) in the event of an impact of the vehicle, and comprising a device (2) configured for generating a variable magnetic field (10) and having a core (6) wound with a coil (7), the magnetic field (10) acting on the magneto-rheological fluid (3) in order to regulate flow properties thereof, **characterized in that** the coil (7) together with said core (6) is arranged in the flow zone (5), wherein the axis of the coil (7) is oriented perpendicularly to the direction of the flow of the magneto-rheological fluid (3), said flow zone (5) having a sheathing formed of a magnetically conductive material.

2. The apparatus according to claim 1, **characterized in that** the flow zone (5) is subdivided into two flow routes (16) by the core (6) wound with the coil (7).

3. The apparatus according to claim 1 or 2, **characterized in that** each flow route (16) is subdivided by at least one partition (15) having planar polar faces (13, 14).

4. The apparatus according to one of claims 1 to 3, **characterized in that** a plurality of partitions (15) are combined, parallel to one another, in at least one bundle (17).

5. The apparatus according to claim 3 or 4, **characterized in that** the partitions (15) are combined into two bundles (17) which are disposed on both sides of the core (6) wound with the coil (7).

6. The apparatus according to claim 4 or 5, **characterized in that** the partitions (15) extend parallel to the flow routes (16) and are spaced apart from one another by spacer pieces, for example by upstanding tabs (18).

7. The apparatus according to claim 6, **characterized in that** the height of each flow route (16) substantially corresponds to the thickness of one of the partitions (15).

8. The apparatus according to one of claims 1 to 7, **characterized in that** the core (6) within the coil (7) contains flow routes (16) subdivided by at least one partition (15), wherein the winding of the coil (7) leaves free the inlet and outlet orifices of the flow routes (16).

9. The apparatus according to claim 4 or 5, **characterized in that** the bundle (17) is formed with a cavity (21) continuous over the length thereof.

10. The apparatus according to claim 4 or 5, **characterized in that** the partitions (15) extend lined up closely to one another perpendicularly to the flow direction and have slots (19) forming the flow routes (16).

11. The apparatus according to one of claims 3 to 10, **characterized in that** the partitions (15) are stamped out of transformer sheet and are preferably insulated on faces touching one another, in particular lacquered.

12. The apparatus according to claim 1, **characterized in that** the core (6) has planar pole faces (11, 12), the sheathing of the flow zone (5) being cylindrical, additional planar pole faces (13, 14) being provided on elements (23) shaped like segments of a circle, said additional pole faces (13, 14) being disposed opposite of the planar pole faces (11, 12) of the core (6), said elements (23) having curved faces adapted to the inner wall of the sheathing (5).

13. The apparatus according to one of claims 10 to 12, **characterized in that** each partition (15) is a single piece and comprises at least one connection web (22) connecting webs (20) separating the slots (19), and preferably a middle region belonging to the core (6), as well as the elements (23) shaped like segments of a circle lying in opposite end regions.

14. The apparatus according to one of claims 1 to 13, **characterized in that** the magneto-rheological fluid (3) is enclosed in a capsule (31) having a predetermined bursting region (32) which bursts when a defined external force action is exceeded.

15. The apparatus according to one of claims 1 to 14, **characterized in that** the flow zone is subdivided into flow routes by at least one, preferably by a plurality of partitions (15') spaced apart from one another, and a specific partition coil is assigned to at least a part of the partitions, preferably to each partition, the partition coil preferably being led around the partitions in the area of the end faces thereof.

16. The apparatus according to claim 15, **characterized in that** the partition coil has a single turn.

17. The apparatus according to claim 16 or 17, **characterized in that** the partition coil is formed by an insulated conductor

18. The apparatus according to one of claims 1 to 17, **characterized in that** the partition coils of adjacent partitions are electrically connected to one another, preferably connected in series.

19. The apparatus according to one of claims 1 to 18, **characterized in that** the device is configured such that, upon a maximum applied magnetic field, the apparatus blocks the passage of the magneto-rheological fluid through the flow routes (9).

20. The apparatus according to claim 19, **characterized in that** the device is configured to block the magneto-rheological fluid against pressures of up to 60 bar, preferably up to 200 bar.

21. A steering column comprising an energy-absorbing apparatus according to one of claims 1 to 14.

## Revendications

1. Dispositif d'absorption d'énergie pour la protection d'occupants dans des véhicules automobiles, avec un réservoir (1) dans lequel est contenu un liquide magnéto-rhéologique (3) qui, lors d'un impact, est comprimé à travers un circuit d'écoulement (5), et avec un équipement (2) produisant un champ magnétique (10) variable et qui présente un noyau (6) entouré d'une bobine (7), le champ magnétique (10) agissant, pour la régulation des caractéristiques d'écoulement, sur le liquide magnéto-rhéologique (3), **caractérisé en ce que** la bobine (7) avec le noyau (6) est disposée dans le circuit d'écoulement (5), l'axe de la bobine (7) étant perpendiculaire à la direction d'écoulement du liquide magnéto-rhéologique (3), et **en ce que** le circuit d'écoulement (5) présente une enveloppe en matériau magnétiquement conducteur.

2. Dispositif selon la revendication 1, **caractérisé en ce que** le circuit d'écoulement (5) est divisé en deux voies d'écoulement (16) par le noyau (6) entouré de la bobine (7).

3. Dispositif selon la revendication 1 ou la revendication 2, **caractérisé en ce que** chaque voie d'écoulement (16) est divisée par au moins une cloison de séparation (15) présentant des faces polaires (13, 14) planes.

4. Dispositif selon l'une des revendications 1 à 3, **caractérisé en ce que** plusieurs cloisons de séparation (15) sont réunies parallèlement entre elles en au moins un paquet (17).

5. Dispositif selon la revendication 3 ou la revendication 4, **caractérisé en ce que** les cloisons de séparation (15) sont réunies en deux paquets (17) qui sont disposés des deux côtés du noyau (6) entouré de la bobine (7).

6. Dispositif selon la revendication 4 ou la revendication 5, **caractérisé en ce que** les cloisons de séparation (15) s'étendent parallèlement aux voies d'écoulement (16) et sont maintenues espacées entre elles par des pièces d'écartement, par exemple des pattes (18) surélevées.

7. Dispositif selon la revendication 6, **caractérisé en ce que** la hauteur de chaque voie d'écoulement (16) correspond essentiellement à l'épaisseur d'une cloison de séparation (15).

8. Dispositif selon l'une des revendications 1 à 7, **caractérisé en ce que** le noyau (6) à l'intérieur de la bobine (7) contient des voies d'écoulement (16) divisées par au moins une cloison de séparation (15), l'enroulement de la bobine (7) laissant libre les ouvertures d'entrée et de sortie des voies d'écoulement (16).

9. Dispositif selon la revendication 4 ou la revendication 5, **caractérisé en ce que** le paquet (17) présente une cavité (21) continue sur la longueur.

10. Dispositif selon la revendication 4 ou la revendication 5, **caractérisé en ce que** les cloisons de séparation (15) s'étendent, en rangs serrés les uns contre les autres, perpendiculairement à la direction d'écoulement et présentent des fentes (19) qui forment les voies d'écoulement (16).

11. Dispositif selon l'une des revendications 3 à 10, **caractérisé en ce que** les cloisons de séparation (15) sont estampées dans une tôle pour transformateur et sont de préférence isolées au niveau des faces qui se touchent, en particulier elles sont peintes.

12. Dispositif selon la revendication 1, **caractérisé en ce que** le noyau (6) présente des faces polaires (11, 12) planes, et **en ce que** l'enveloppe du circuit d'écoulement (5) est cylindrique, des faces polaires (13, 14) planes supplémentaires, opposées aux faces polaires (11, 12) planes du noyau (6), étant prévues sur des éléments (23) en forme de segment de cercle dont les faces bombées sont adaptées à la paroi interne de l'enveloppe (5).

13. Dispositif selon l'une des revendications 10 à 12, **caractérisé en ce que**, dans chaque cloison de séparation (15), au moins les nervures (20) séparant les fentes (19), et de préférence également une zone centrale appartenant au noyau (6), ainsi que les éléments (23) en forme de segment de cercle mutuellement opposés dans des zones extrêmes constituent d'une seule pièce et sont liés par le biais d'au moins une nervure de raccordement (22).

14. Dispositif selon l'une des revendications 1 à 13, **caractérisé en ce que** le liquide magnéto-rhéologique (3) est contenu dans une capsule (31) présentant une zone d'éclatement (32) prédéfinie et qui éclate en cas de dépassement d'une force extérieure définie.

15. Dispositif selon l'une des revendications 1 à 14, **caractérisé en ce que** le circuit d'écoulement est divisé en voies d'écoulement par au moins une, de préférence plusieurs cloisons de séparation (15') espacées, et **en ce qu'**une propre bobine de cloison de séparation est affectée à au moins une partie des cloisons de séparation, de préférence à chaque cloison de séparation et est, de préférence dans la zone des faces avant des cloisons de séparation, guidée tout autour de celles-ci.

16. Dispositif selon la revendication 15, **caractérisé en ce que** la bobine de cloison de séparation présente une seule spire.

17. Dispositif selon la revendication 16 ou la revendication 17, **caractérisé en ce que** la bobine de cloison de séparation est formée d'un conducteur isolé.

18. Dispositif selon l'une des revendications 1 à 17, **caractérisé en ce que** les bobines de cloison de séparation de cloisons de séparation voisines sont connectées électriquement, sont de préférence montées en série.

19. Dispositif selon l'une des revendications 1 à 18, **caractérisé en ce que** le dispositif, en présence d'un champ magnétique appliqué de façon maximale, bloque le passage du liquide magnéto-rhéologique à travers les voies d'écoulement (9).

20. Dispositif selon la revendication 19, **caractérisé en ce que**, avec le dispositif, il est possible de bloquer des pressions dans le liquide magnéto-rhéologique atteignant 60 bars, de préférence 200 bars.

21. Colonne de direction avec un dispositif d'absorption d'énergie selon l'une des revendications 1 à 14.
